# EUROPEAN PATENT SPECIFICATION

(11) **EP 2 438 986 B1**
(45) Date of publication and mention of the grant of the patent: **04.04.2018**
(21) Application number: 09845385.5
(22) Date of filing: 30.12.2009
(51) Int. Cl.: B01J 23/745, B01D 53/52, C01G 49/02, B01J 37/04, B01J 23/90, B01J 38/48

(54) **RENEWABLE AND REUSABLE DESULFURIZER AND PREPARATION METHOD AND REGENERATION METHOD THEREOF**
ERNEUERBARER UND WIEDERVERWENDBARER ENTSCHWEFELER SOWIE HERSTELLUNGSVERFAHREN UND REGENERIERUNGSVERFAHREN DAFÜR
AGENT DÉSULFURANT RENOUVELABLE ET RÉUTILISABLE ET SON PROCÉDÉ DE PRÉPARATION ET DE RÉGÉNÉRATION

(30) Priority: 31.05.2009 CN 200910086345
(43) Date of publication of application: 11.04.2012
(73) Proprietor: Beijing Sanju Environmental Protection and New Material Co., Ltd., Haidian, Beijing 100080 (CN)
(72) Inventor: LIU, Zhenyi, Beijing 100080 (CN); WANG, Xiangsheng, Beijing 100080 (CN)
(74) Representative: Rogers, Alex Lee
(86) International application number: PCT/CN2009/001594
(87) International publication number: WO 2010/139104

(56) References cited:
- EP-A1- 2 383 030
- EP-A1- 2 383 036
- EP-A1- 2 383 227
- EP-A1- 2 384 814
- WO-A2-2009/150232
- CN-A- 101 584 962
- CN-A- 101 585 556
- CN-A- 101 767 828
- GB-A- 838 571
- JP-A- 10 259 026
- US-A1- 2005 123 470
- US-A1- 2005 247 636
- US-A1- 2008 047 395
- US-A1- 2008 047 395
- BENJAMIN M M ET AL: "Multiple-site adsorption of Cd, Cu, Zn, and Pb on amorphous iron oxyhydroxide", JOURNAL OF COLLOID AND INTERFACE SCIENCE, ACADEMIC PRESS, NEW YORK, NY, US, vol. 79, no. 1, 1 January 1981 (1981-01-01), pages 209-221, XP025443714, ISSN: 0021-9797, DOI: 10.1016/0021-9797(81)90063-1 [retrieved on 1981-01-01]
- LIU, ZHENYI ET AL.: 'Characterization for Iron Oxide Desulfurizer Active Component with High Sulfur Content' NATIONAL INFORMATION CENTER OF GAS PURIFICATION 2006 TECHNICAL EXCHANGES PROCEEDINGS December 2006, pages 107 - 108, XP008150134

## Description

### FIELD OF THE INVENTION

The invention relates to a desulfurizer used for dry desulphurization, which can be regenerated, belonging to desulfurizer technology field.

### BACKGROUND OF THE INVENTION

Sulfide is produced in many industrial occasions, such as in the course of producing chemical raw materials from coal or oil, and is contained in the waste water or exhausted gas caused by the industrial production. Wherein, there are lots of sulfur-containing substances in the raw materials, and hydrogen sulfide will be discharged from these sulfur-containing substances during the process of production, so as to result in catalyst deactivation in the subsequent production. Also, hydrogen sulfides in waste water or gas will cause environmental pollution, or poison human and animal if discharged without being treated.

In order to effectively reduce sulfide especially to minimize the effects of hydrogen sulfide on the industrial production and the environment, researchers have paid enough attention to the research and development of the desulfurizer. There are lots of desulfurizer for the removal of hydrogen sulfide in the existing technologies, and a traditional and important one is the iron series desulfurizer which is produced by mainly using iron oxides as the active ingredients of the desulfurizer, wherein iron oxides includes ferroferric oxide, ferric oxide, and iron oxide hydroxide (FeOOH). However, the desulfurizer of iron series in the existing technologies has a shortcoming that sulfur capacity is not high enough, such as a agglutinate metal oxide disclosed in the US patent No. US6664210A. This metal oxide can also be used to remove hydrogen sulfide, the agglutinate metal oxide disclosed in the patent documents includes one or more metal oxides, molecular formula of which is MexOy , wherein , Me is a metal element selected from groups 4, 5, 6 and 7 of the element periodic table, x is selected from 1-3 , y is selected from 1-4. The agglutinate metal oxide also includes hydrate of said metal oxides and detest water binders. Obviously, when Me is Fe, the agglutinate metal oxides in this patent is comprised of Fe₃O₄ Fe₂O₃, Fe₂O₃ · H₂O and detest water binders. The sulfur capacity test shows that the average amount of sulfur kept by the compression metal oxide particles is equal to 10% of the weight of agglutinate metal oxide particles, preferably 30%; the capability of holding hydrogen sulfide is 0.27 kg per kg metal oxide particles (0.27 pounds per pound metal oxide particles). Consequently, the sulfur capacity of the agglutinate metal oxides (removal hydrogen sulfide) can only achieve 27% to 30%, so that the effect of sulfur capacity is not good.

In addition, the used desulfurizer in the existing technologies (including iron series desulfurizer) cannot be regenerated or is difficult to be regenerated, so that lots of waste agents have to be buried, and this may cause waste of reusable resources in the desulfurizer and environmental pollution.

The applicant has been committed to desulfurization property study of amorphous iron oxide hydroxide and has published an article titled "the characterization of a kind of iron oxides active component with high sulfur capacity" in 2006 (refer to the page 107 to 111 in the proceeding of technique exchanging meeting of gas purification information station in 2006). In this article, a laboratory preparation thought of amorphous iron oxide hydroxide was disclosed, its sulfur capacity was tested, and the desulfurization and regeneration mechanism of the said amorphous iron oxide hydroxide is verified through experimental data. It also disclosed that the amorphous iron oxide hydroxide could be regenerated in air. The research showed that amorphous iron oxide hydroxide has high desulfurization activity and can be regenerated.

However, this study is still at the laboratory exploration stage, and there are still lots of ferroferric oxide, ferric oxide or iron oxide hydroxide in other crystalline states in this product and the content of amorphous iron oxide hydroxide does not meet the expectation. Also, the regeneration method has not been systematically studied, and the industrial application of such method also has not been studied.

The ultimate objective of this study is to prepare desulfurizer with high sulfur capacity in which amorphous iron oxide hydroxide is used as active ingredient, which can be put in mass production and even can be regenerated after being used. If the objective can be achieved, it will be a significant revolution in the desulfurizer field and also the two following shortcomings of the existing desulfurizer can be eliminated. (1) The sulfur capacity of desulfurizer in the existing technologies (including desulfurizer of iron series) is relatively low. Although the sulfur capacity of amorphous iron oxide hydroxide in the existing technologies is higher than that of the other desulfurizers, iron oxides (such as ferroferric oxide, ferric oxide) or iron oxide hydroxide in different crystalline states can be obtained through different preparation methods, because the preparation of amorphous iron oxide hydroxide is closely related to the reaction conditions such as PH value, temperature, and oxide, The content of amorphous iron oxide hydroxide in the product can be low (lower than 40%), in addition the product has low sulfur capacity and cannot be regenerated, so this result is in little economic significance. (2) In the existing technology, the other kinds of desulfurizers cannot be regenerated or the regeneration cost is very high; therefore, lots of waste agent has to be buried, and this may cause waste of reusable resources in desulfurizer and environmental pollution.

### SUMMARY OF THE INVENTION

In view of the above-described problems, it is one objective of the invention to provide a desulfurizer that has a high sulfur capacity and can be mass produced in industry and regenerated.

It is another objective of the invention to provide a method for preparing said desulfurizer.

In order to achieve the above mentioned objectives, several technical difficulties need to be overcome. Firstly, a material or composition comprising high purity amorphous iron oxide hydroxide with high sulfur capacity can be massively manufactured, and also the waste agent from the used desulfurizer should be regenerated quickly and the elemental sulfur generated during the process of regeneration can be recycled, finally, the material or composition regenerated after the elemental sulfur is removed can be used to produce a desulfurizer with high sulfur capacity.

In order to achieve the above mentioned objectives, the invention provides a desulfurizer according to claim 1 and a method for preparing a desulfurized according to claim 6.

In a class of this embodiment, the desulfurizer further comprises an additive.

In a class of this embodiment, kneading is achieved using a kneader with a kneading time of at least 15 minutes, preferably between 15 minutes and 30 minutes.

In a class of this embodiment, the reacting temperature does not exceed 50°C.

In step (2), controlling the reacting temperature between 70 and 90 °C can also obtain the composition comprising amorphous iron oxide hydroxide , but the content of amorphous iron oxide hydroxide is less in this temperature ranges.

In a class of this embodiment, in step (4), the temperature of the natural drying process is maintained between -5°C and 45°C, and the temperature for roasting does not exceed 100°C, preferably between 80°C and 100°C.

A method for preparing said desulfurizer comprises the steps shown in claim 6.

The advantages of the invention are summarized below:
1. In this invention, the desulfurizer comprises composition comprising amorphous iron oxide hydroxide and organic binder, and in the composition generated through said preparation method, the content of amorphous iron oxide hydroxide can be high, so the desulfurizer comprising the composition has a high sulfur capacity (in the absence of oxygen, a one-time sulfur capacity can reach 56%) and can be regenerated easily;
2. The desulfurizer comprises an additive selected from sawdust powder, rice hull powder, wheat bran powder, or a mixture thereof, so that the desulfurizer has a loose structure and absorbs sulfide easily;
3. The organic binder selected from sodium carboxymethylcellulose, sesbania powder, cellulose powder, or a mixture thereof does not cover the surface of the amorphous iron oxide hydroxide. Therefore, the desulfurization activity is not inhibited and the desulfurizer has a high sulfur capacity.
4. Dry kneading of the solid soluble ferrous salt with the solid hydroxide to prepare the composition comprising amorphous iron oxide hydroxide. During the process, the ratio of iron element hydroxyl is controlled in order to prevent colloidal Fe (OH)₂ and Fe (OH)₃ from being produced, so as to further avoid the subsequent problem with filtering the colloidal Fe (OH)₂ and Fe (OH)₃ caused by the production of such colloid; furthermore, the reaction temperature is kept below 70°C, more preferably below 50°C, so as to mainly produce amorphous iron oxide hydroxide, but not other types of crystal iron oxide hydroxide or iron oxides such as ferroferric oxide, ferric oxide, and so on, which may improve the stability and purity of the amorphous iron oxide hydroxide product.
5. Dry kneading the solid soluble ferrous salt with the solid hydroxide to prepare the composition comprising amorphous iron oxide hydroxide may avoid the problem with treatment of the discharge liquid generated from preparation of amorphous iron oxide hydroxide using solution, which can be environmentally friendly. Additionally, during the dry kneading process, the reaction of solid soluble ferrous salt and solid hydroxide releases heat, which can be used in the kneading process, so as to save energy.
6. Upon preparing the composition comprising amorphous iron oxide hydroxide, the mixing of the solid soluble ferrous salt with the solid hydroxide was completed in only one step, so that the process is simple and suitable for mass production.
7. During the process, the drying or roasting temperature is controlled, so as to guarantee the minimal production of ferric iron.
8. The desulfurizer can be regenerately quickly by the industrial regeneration method, and the regenerated composition still has high sulfur capacity, then adding the organic binder and the additive to the regenerated composition can allow a new desulfurizer to be generated; The new desulfurizer can also be regenerated after being used, and this cycle of use not only saves resources and reduces environmental pollution, but also has great economical significance.
9. Not only amorphous iron oxide hydroxide, but also crystalline elemental sulfur can be produced by the two methods of regeneration described in this invention, which optimizes resource utilization.
10. Washing the waste mixture with water prior to grinding can effectively remove impurities that cover the surface of the waste mixture, so as not to affect the subsequent reaction.
11. In the regeneration process, oxidation of the suspension by the gas containing oxygen is controllable and has good effects; the weight percent of the solid in the suspension is preferably between 10% and 15%, so as to gain high oxidation rate and realize the complete oxidation.
12. The flotation method is transferred from mining mineral processing to desulfurizer field. The separation of amorphous iron oxide hydroxide from elemental sulfur by flotation is achieved by charging the slurry with air and is purely a physical method. This method is economical and environmentally friendly.
13. The waste mixture is ground into particles for which the size is 100-400 mesh (preferably 200 mesh), which improves the oxidation and further improves the extraction or flotation separation.

### DETAILED DESCRIPTION OF THE EMBODIMENTS

### Example 1

### Preparation of the composition comprising amorphous iron oxide hydroxide

640 g ferrous sulfate powder was mixed uniformly with 240 g sodium hydroxide in which the molar ratio of iron element and hydroxyl was 1:2.8. The resultant mixture was kneaded by a kneader for 3 hours then dried in the air to promote the reaction. The dried mixture was stirred with water and washed repeatedly until no sulfate remained in the solution (as determined by a barium chloride test). The solution was filtered using a centrifuge and the resultant solid was roasted at 80°C for 3 hours to yield a composition comprising amorphous iron oxide hydroxide (composition **A**). In the composition A, the weight percent of amorphous iron oxide hydroxide was 97.0% and the remaining material comprised Na₂SO₄ and water, and the sulfur capacity of the composition A is 52%. The concentration of amorphous iron oxide hydroxide was measured using the titanium trichloride-potassium dichromate volumetric method, which is the national standard (GB6730.5-86) for iron ore analysis.

### Preparation and regeneration of the desulfurizer

500 g composition **A** comprising amorphous iron oxide hydroxide with particle size of 100 mesh, 40 g sesbania powder, and 10 g sawdust powder were mixed uniformly, kneaded with appropriate quantities of water using a small kneader, and extruded using a small twin screw extruder to yield a strip-shaped desulfurizer. Such desulfurizer was roasted in an oven at 70°C for 6 hours and the sulfur capacity thereof was measured to be 47%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder for which the particle size was 100 mesh. Then the powder was prepared into an aqueous suspension for which the solid weight percent is 10%. After that, compressed air was charged into the slurry and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was placed in a flotation tank, water was added, and air was charged. The elemental sulfur, the additive, and the binder were removed together with excess air, by overflowing the tank. The precipitate in the bottom of the tank was a composition comprising amorphous iron oxide hydroxide. The overflowed elemental sulfur could be purified by extraction or other methods. The composition comprising amorphous iron oxide hydroxide was roasted at 80°C, and sesbania powder and sawdust powder were added according to the proportions described above. The mixture was treated by the method and under the reaction conditions described above to yield a new desulfurizer (desulfurizer **B**) for which the sulfur capacity was 45%.

The desulfurizer **B** was used to desulfurize. After passing H₂S through the reactor, the resultant waste mixture was unloaded and regenerated according to the process described for the desulfurizer **A**. After roasting the regenerated desulfurizer **B,** sesbania powder and sawdust powder were added according to the proportions described above. The mixture was treated by the method and under the reaction conditions described above to yield a new desulfurizer (desulfurizer **C**) for which the sulfur capacity was 43%.

After four rounds of desulfurizing and regenerating, the fifth desulfurizer (desulfurizer **E**) was generated, for which the sulfur capacity was 38.5%.

### Example 2

### Preparation of a composition comprising amorphous iron oxide hydroxide

640 g ferrous sulfate powder was mixed uniformly with 212 g sodium hydroxide in which the molar ratio of iron element and hydroxyl was 1:2.4. The resultant mixture was kneaded using a kneader for 0.5 hour then dried in the air. The dried mixture was stirred with water and washed repeatedly until no sulfate was detected in the solution (as determined by a barium chloride test). The solution was filtered with a centrifuge and the resultant solid was dried naturally at -5°C for 10 hours to yield a composition comprising amorphous iron oxide hydroxide (composition **B**). In the composition B, the weight percent of amorphous iron oxide hydroxide was 95.8%, and the remaining material comprised Na₂SO₄ and water, for which the sulfur capacity was 51.8%.

### Preparation and regeneration of the desulfurizer

400 g composition **B** comprising amorphous iron oxide hydroxide with particle size of 100 mesh, 48 g sesbania powder, and 5 g rice hull powder were mixed uniformly, kneaded with appropriate quantities of water using a small kneader, and extruded using a small twin screw extruder to yield a strip. The strip was subsequently treated using a pill machine to yield a pill-shaped desulfurizer. The pill-shaped desulfurizer was roasted in an oven at 60°C for 7 hours, and the sulfur capacity thereof was measured to be 45%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder for which the particle size was 200 mesh. Then the powder was prepared into an aqueous suspension for which the solid weight percent was 15%. After that, compressed air was charged, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was filtered to yield a solid that was then extracted thrice with CS₂. The extract was combined and distilled to yield crystallized elemental sulfur. The remaining solid after extraction was a composition comprising amorphous iron oxide hydroxide. The composition comprising amorphous iron oxide hydroxide was roasted at 70°C, and sesbania powder and rice hull powder were added according to the proportions described above. The mixture was treated by the method and under the reaction conditions described above to yield a new desulfurizer (desulfurizer **B**) for which the sulfur capacity was 44%.

The desulfurizer **B** was used to desulfurize. After passing H₂S through the reactor, the resultant waste mixture was unloaded and regenerated according to the process described for the desulfurizer **A**. After roasting the regenerated desulfurizer **B,** sesbania powder and sawdust powder were added according to the proportions described above. The mixture was treated by the method and under the reaction conditions described above to yield a new desulfurizer (desulfurizer **C**) for which the sulfur capacity was 42.5%.

### Reference Example 3

### Preparation of a composition comprising amorphous iron oxide hydroxide

686 g ferrous nitrate powder was mixed uniformly with 468 g potassium hydroxide in which the molar ratio of iron element and hydroxyl was 1:2.0. The resultant mixture was kneaded using a kneader for 1 hour then dried in the air. The dried mixture was stirred with water and washed repeatedly until no sulfate was detected in the solution (as determined by a barium chloride test). The solution was filtered with a centrifuge and the resultant solid was dried naturally at 45°C for 3 hours to yield a composition comprising amorphous iron oxide hydroxide (composition **C**). In the composition, the weight percent of amorphous iron oxide hydroxide was 96.1 %, and the remaining solid comprised KNO₃ and water, for which the sulfur capacity was 51.3%.

### Preparation and regeneration of the desulfurizer

1000 g composition **C** comprising amorphous iron oxide hydroxide for which the particle size was 100 mesh and 80 g sesbania powder were mixed uniformly in a mixer and extruded using a sugar coater to yield a ball-shaped desulfurizer (Φ3-5). The ball-shaped desulfurizer was roasted in an oven at 90°C for 4 hours, and the sulfur capacity thereof was measured to be 48%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder for which the particle size was 400 mesh. Then the powder was prepared into an aqueous suspension for which the solid weight percent is 5%. After that, compressed air was charged, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was placed in a flotation tank. Water was added and water glass and kerosene were added as an auxiliary agent, and air was charged into the slurry, and the elemental sulfur, additive, and binder were removed together with excess air, from the tank by overflowing. The precipitate at the bottom of the tank was a composition comprising amorphous iron oxide hydroxide. The overflowed elemental sulfur could be purified by extraction or some other methods. The composition comprising amorphous iron oxide hydroxide was roasted at 80°C, and sesbania powder was added according to the proportions mentioned above. The mixture was treated by the method and under the reaction conditions described above to yield a new desulfurizer (Desulfurizer **B**) for which the sulfur capacity was 46%.

The desulfurizer **B** was used to desulfurize. After passing H₂S through the reactor, the resultant waste mixture was unloaded and regenerated according to the process described for the desulfurizer **A**. After roasting the regenerated desulfurizer **B,** sesbania powder was added according to the proportions described above. The mixture was treated by the method and under the reaction conditions described above to yield a new desulfurizer (desulfurizer **C**) for which the sulfur capacity was 44%.

After four rounds of desulfurizing and regenerating, a fifth desulfurizer (desulfurizer **E**) for which the sulfur capacity is 40% was obtained.

The auxiliary agent added was to accelerate the separation of amorphous iron oxide hydroxide and elemental sulfur. The following examples are the same.

### Example 4

### Preparation of a composition comprising amorphous iron oxide hydroxide

640 g ferrous sulfate powder was mixed uniformly with 220 g sodium hydroxide in which the molar ratio of iron element and hydroxyl was 1:2.5. The resultant mixture was kneaded using a kneader for 15 minutes then dried in the air. The dried mixture was stirred with water and washed repeatedly until no sulfate was detected in solution (as determined by a barium chloride test). The solution was filtered with a centrifuge and the resultant solid was roasted at 90°C for 3 hours to yield a composition comprising amorphous iron oxide hydroxide (composition **D**). In the composition D, the weight percent of amorphous iron oxide hydroxide was 95.6% and the remaining solid comprised Na₂SO₄ and water, for which sulfur capacity was 51.3%.

### Preparation and regeneration of the desulfurizer

500 g composition **D** comprising amorphous iron oxide hydroxide for which the particle size was 100 mesh, 45 g sodium carboxymethylcellulose (Dissolved in advance), and 10 g wheat bran powder were mixed uniformly, kneaded with appropriate quantities of water using a small kneader, and extruded using a small twin screw extruder to yield a strip that was subsequently treated with a pill machine to yield a pill-shaped desulfurizer. The pill-shaped desulfurizer was roasted in an oven at 75°C for 5 hours and the sulfur capacity thereof was measured to be 46%. The desulfurizer was named desulfurizer **A**.

To a desulfurization reactor was added desulfurizer **A**. After passing H₂S through the reactor, the resultant waste mixture was unloaded and washed with water and ground in the presence of water using a wet ball mill into powder for which the particle size was 200 mesh. Then the powder was prepared into an aqueous suspension for which the solid weight percent was 30%, After that, compressed air was charged into the slurry, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was filtered to yield a solid. The solid was placed into a flotation tank. Then, water was added and water glass and kerosene were added as an auxiliary agent, and air was charged into the slurry, the elemental sulfur, the additive, and the binder were removed together with excess air, by overflowing the tank. The precipitate at the bottom of the tank was a composition comprising amorphous iron oxide hydroxide. The overflowed elemental sulfur could be purified by extraction or other methods. The composition comprising amorphous iron oxide hydroxide was roasted at 75°C, and sodium carboxymethylcellulose (Dissolved in advance) as well as wheat bran powder was added according to the proportions described above. The mixture was treated by the method and under the reaction conditions described above to yield a new desulfurizer (desulfurizer **B**) for which the sulfur capacity was 43.6%.

The desulfurizer **B** was used to desulfurize. After passing H₂S through the reactor, the resultant waste mixture was unloaded and regenerated according to the process described for the desulfurizer **A**. After roasting the regenerated desulfurizer B, sodium carboxymethylcellulose and sawdust powder were added according to the proportions described above. The mixture was treated by the method and under the reaction conditions described above to yield a new desulfurizer (desulfurizer **C**) for which the sulfur capacity was 40%.

After four rounds of desulfurizing and regeneration, a fifth desulfurizer (desulfurizer **E**) for which the sulfur capacity was 36% was obtained.

### Reference Example 5

### Preparation of composition comprising amorphous iron oxide hydroxide

640 g ferrous sulfate powder was mixed uniformly with 220 g sodium hydroxide in which the molar ratio of iron and hydroxyl was 1: 2.5. The resultant mixture was kneaded using a kneader for 2 hours, then dried in air. The dried mixture was stirred with water and washed repeatedly until no sulfate was detected in solution (as determined by a barium chloride test) in the solution. The solution was filtered with a centrifuge and the resultant solid was dried naturally at 30°C for 1 hour to yield a composition comprising amorphous iron oxide hydroxide (named composition **E**). In the composition E, the weight percent of amorphous iron oxide hydroxide was 95.2%, and the remaining material comprised Na₂SO₄ and water, for which the sulfur capacity was 51.0%.

### Preparation and regeneration of desulfurizer

500 g composition **E** comprising amorphous iron oxide hydroxide for which the particle size was 100 mesh and 50 g cellulose powder were mixed uniformly, kneaded with appropriate quantities of water using a small kneader, and extruded using a small twin screw extruder to yield a strip that was subsequently treated using a pill machine to yield a pill-shaped desulfurizer. The pill-shaped desulfurizer was roasted in an oven at 80°C for 4 hours and the sulfur capacity thereof was measured to be 45%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder for which the particle size was 200 mesh. Then the powder was prepared into an aqueous suspension for which the solid weight percent was 15%; after that, compressed air was charged into the suspension, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was filtered to yield a solid that was extracted thrice with CCl₄. The extract was combined and distilled to yield crystallized elemental sulfur. The remaining solid after extraction was a composition comprising amorphous iron oxide hydroxide. The composition comprising amorphous iron oxide hydroxide was roasted at 70°C, and cellulose powder was added according to the proportions described above. The mixture was treated by the method and under the reaction conditions described above to yield a new desulfurizer (desulfurizer **B**) for which the sulfur capacity was 44%.

The desulfurizer **B** was used to desulfurize. After passing H₂S through the reactor, the resultant waste mixture was unloaded and regenerated according to the process described for the desulfurizer **A**. After roasting the regenerated dedulfurizer B, cellulose powder was added according to the proportions described above. The mixture was treated by the method and under the reaction conditions described above to yield a new desulfurizer (desulfurizer **C**) for which the sulfur capacity was 42.5%.

### Example 6

### Preparation of composition comprising amorphous iron oxide hydroxide

640 g ferrous sulfate powder was mixed uniformly with 220 g sodium hydroxide in which the molar ratio of iron element and hydroxyl was 1: 2.5. The resultant mixture was kneaded by a kneader for 25 minutes then dried in air. The dried mixture was stirred with water and washed repeatedly until no sulfate was detected in solution (as determined by a barium chloride test). The solution was filtered using a centrifuge and the resultant solid was dried naturally at 30°C for 1 hour to yield a composition comprising amorphous iron oxide hydroxide (named composition **F**). In the composition F, the weight percent of amorphous iron oxide hydroxide was 95.3%, and the remaining material comprised Na₂SO₄ and water, for which the sulfur capacity was 50.8%.

### Preparation and regeneration of the desulfurizer

500 g composition F comprising amorphous iron oxide hydroxide for which particle size was 100 mesh, 40 g cellulose powder, and 6 g rice hull powder were mixed uniformly, kneaded with appropriate quantities of water using a small kneader, and extruded using a small twin screw extruder to yield a strip that was subsequently treated using a pill machine to yield a pill-shaped desulfurizer. The pill-shaped desulfurizer was dried naturally at room temperature for 20 hours and the sulfur capacity thereof was measured to be 47.5%. The desulfurizer was named desulfurizer **A**.

The desulfurizer **A** was added to a desulfurization reactor. After H₂S passed through the reactor, the resultant waste mixture was unloaded and washed with water and ground in the presence of water using a wet ball mill into powder for which the particle size was 200 mesh. Then the powder was prepared into an aqueous suspension for which the solid weight percent was 30%; after that, compressed air was charged, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was filtered to yield a solid that was placed in a flotation tank. Then, water was added and water glass and kerosene were added as an auxiliary agent, and air was charged into the slurry, the elemental sulfur, the additive, and the binder were removed together with excess air, by overflowing the tank. The precipitate at the bottom of the tank was a composition comprising amorphous iron oxide hydroxide. The overflowed elemental sulfur could be purified by extraction or other methods. The composition comprising amorphous iron oxide hydroxide was roasted at 75°C, and cellulose powder and rice hull powder were added according to the proportions described above. The mixture was treated by the method and under the reaction conditions described above to yield a new desulfurizer (desulfurizer **B**) for which the sulfur capacity was 45%.

The desulfurizer **B** was used to desulfurize. After passing H₂S through the reactor, the resultant waste mixture was unloaded and regenerated according to the process described for the desulfurizer **A**. After roasting the regenerated dedulfurizer B, cellulose powder and rice hull powder were added according to the proportions described above. The mixture was treated by the method and under the reaction conditions described above to yield a new desulfurizer (desulfurizer **C**) for which the sulfur capacity was 42%.

### Reference Example 7

### Preparation of the composition comprising amorphous iron oxide hydroxide

64 g ferrous sulfate powder were mixed uniformly with 20 g sodium hydroxide in which the molar ratio of iron element and hydroxyl was 1:2.3. The resultant mixture was kneaded using a kneader for 30 minutes then dried in the air. The dried mixture was stirred with water and washed repeatedly until no sulfate was detected in solution (as determined by a barium chloride test). The solution was filtered with a centrifuge and the resultant solid was roasted at 100°C for 1 hour to yield a composition comprising amorphous iron oxide hydroxide (composition **G**). In the composition G, the weight percent of amorphous iron oxide hydroxide was 95.6%, and the remaining material comprised Na₂SO₄ and water, for which the sulfur capacity was 50.2%.

### Preparation and regeneration of the desulfurizer

500 g composition **G** comprising amorphous iron oxide hydroxide for which particle size was 100 mesh and 67 g sodium carboxymethylcellulose (dissolved in advance) were mixed uniformly, kneaded with appropriate quantities of water using a small kneader, and extruded using a small twin screw extruder to yield a strip that was subsequently treated using a pill machine to yield a pill-shaped desulfurizer. The pill-shaped desulfurizer was roasted in an oven at 75°C for 5 hours, and the sulfur capacity thereof was measured to be 49%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder for which the particle size was 200 mesh. Then the powder was prepared into an aqueous suspension for which the solid weight percent was 30%; after that, compressed air was charged into the suspension, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was filtered to yield a solid. The solid was placed into a flotation tank. Water was added and water glass and kerosene were added as an auxiliary agent, and air was charged into the slurry, the elemental sulfur, the additive, and the binder were removed together with excess air, by overflowing the tank. The precipitate in the bottom of the tank was a composition comprising amorphous iron oxide hydroxide. The overflowed elemental sulfur could be purified by extraction or some other methods. The composition comprising amorphous iron oxide hydroxide was roasted at 75°C, and sodium carboxymethylcellulose (dissolved in advance) was added according to the proportions described above. The mixture was treated by the method and under the reaction conditions described above to yield a new desulfurizer (Desulfurizer **B**) with a sulfur capacity of 47%.

The desulfurizer **B** was used to desulfurize. After passing H₂S through the reactor, the resultant waste mixture was unloaded and regenerated according to the process described for the desulfurizer **A**. After roasting the regenerated dedulfurizer B, sodium carboxymethylcellulose was added according to the proportions described above. The mixture was treated by the method and under the reaction conditions described above to yield a new desulfurizer (desulfurizer **C**) for which a sulfur capacity of 45.5%.

After four rounds of desulfurizing and regeneration, the fifth desulfurizer (desulfurizer **E**) was regenerated, for which the sulfur capacity was 42%.

### Example 8

### Preparation of a composition comprising amorphous iron oxide hydroxide

920 g ferrous sulfate powder were mixed uniformly with 280 g sodium hydroxide in which the molar ratio of iron element and hydroxyl was 1:2.2. The resultant mixture was kneaded using a kneader for 30 minutes then dried in air. The dried mixture was stirred with water and washed repeatedly until no sulfate was detected in solution (as determined by a barium chloride test). The solution was filtered with a centrifuge and the resultant solid was dried naturally at 45°C for 1 hour to yield a composition comprising amorphous iron oxide hydroxide (composition **H**). In the composition H, the weight percent of amorphous iron oxide hydroxide was 96.5%, and the remaining material comprised Na₂SO₄ and water, for which a sulfur capacity was 49.5%.

### Preparation and regeneration of the desulfurizer

485 g composition H comprising amorphous iron oxide hydroxide for which the particle size was 100 mesh, 40 g sesbania powder, and 25 g wheat bran powder were mixed uniformly, kneaded with appropriate quantities of water using a small kneader, and extruded using a small twin screw extruder to yield a strip-shaped desulfurizer. The strip-shaped desulfurizer was roasted in an oven at 30°C for 15 hours and the sulfur capacity thereof was measured to be 42%. The desulfurizer was named desulfurizer **A**.

The desulfurizer **A** was added to a desulfurization reactor. After passing H₂S through the reactor, the resultant waste mixture was unloaded and washed with water and ground in the presence of water using a wet ball mill into powder with particle size of 100 mesh. The powder was prepared into an aqueous suspension for which the solid weight percent was 10%; after that, compressed air was charged, and a sample was collected for testing. When no H₂S was produced from the reaction between the sample and hydrochloric acid, it was determined that the iron sulfide in the suspension had been completely transformed into a slurry comprising amorphous iron oxide hydroxide and elemental sulfur. The slurry was placed in a flotation tank. After water was added and air was charged into the slurry, the elemental sulfur, the additive, and the binder were removed together with excess air, by overflowing the tank. The precipitate at the bottom of the tank was a composition comprising amorphous iron oxide hydroxide. The overflowed elemental sulfur could be purified by extraction or other methods. The composition comprising amorphous iron oxide hydroxide was roasted at 80°C, and sesbania powder and wheat bran powder were added in the proportions described above. The mixture was treated by the method and under the reaction conditions described above to yield a new desulfurizer (desulfurizer **B**) for which a sulfur capacity of 41 %.

The desulfurizer **B** was used to desulfurize. After passing H₂S through the reactor, the resultant waste mixture was unloaded and regenerated according to the process described for the desulfurizer **A**. After roasting the regenerated dedulfurizer B, sesbania powder and wheat bran powder were added according to the proportions described above. The mixture was treated by the method and under the reaction conditions described above to yield a new desulfurizer (desulfurizer **C**) for which the sulfur capacity was 38%.

### Example 9

400 g regenerated desulfurizer **E** described in Example **1** and 100 g prepared composition **A** comprising amorphous iron oxide hydroxide for which the particle size was larger than 100 mesh, 35 g sesbania powder, and 20 g sawdust powder were mixed uniformly, kneaded with appropriate quantities of water using a small kneader, and extruded using a small twin screw extruder to yield a strip desulfurizer. The desulfurizer was dried naturally for 10 hours and the sulfur capacity thereof was measured to be 43%.

In the above examples, the sulfur capacity was measured using a standard gas containing 40,000 ppm H₂S at normal temperature (between -5 and 45°C) and normal pressure (generally, one atmospheric pressure). The measurement was conducted using a WK-2C integrated microcoulometer (manufactured by Jiangsu Electroanalytical Instrument Factory), which had a minimal measurement volume of 0.2 ppm.

It should be noted that the desulfurizer of the invention can be regenerated and obtain a high sulfur capacity in the presence or absence of other ingredients when the desulfurizer comprises the composition comprising amorphous iron oxide hydroxide and a binder. Therefore, the desulfurizers comprising the composition comprising amorphous iron oxide hydroxide and the binder are protected by this invention. The soluble ferrous salt is not limited to those discribed in the examples and further comprises FeSO₄·7H₂O, FeCl₂·4H₂O, and Fe(NO₃)₂·6H₂O.

## Claims

1. A desulfurizer which can be regenerated, comprising
a composition comprising amorphous iron oxide hydroxide,
an organic binder, selected from a group consisting of sodium carboxymethylcellulose, sesbania powder, cellulose powder, and a mixture thereof, and
an additive, selected from a group consisting of sawdust powder, rice hull powder, wheat bran powder, and a mixture thereof;
wherein the weight percent of said composition comprising amorphous iron oxide hydroxide is 88 %-92%, the weight percent of said organic binder is 7%-11% and the weight percent of said additive is 1%-5%, and
wherein said composition comprising amorphous iron oxide hydroxide is prepared according to the following steps:
(1) mixing a solid soluble ferrous salt with a solid hydroxide to yield a first mixture, wherein the molar ratio of iron element in ferrous salt and hydroxyl in the solid hydroxide is 1:2 to 1:3, and wherein the solid hydroxide is a hydroxide of Group IA or Group IIA elements;
(2) kneading said first mixture and allowing it to react at a temperature not exceeding 70°C to yield a second mixture;
(3) oxidizing said second mixture in the air, and then washing it with water and filtering to yield a third mixture;
(4) drying said third mixture in the air or roasting said third mixture at a temperature not exceeding 100°C to yield the composition comprising amorphous iron oxide hydroxide.

2. The desulfurizer of claim 1, wherein, in step (2), kneading is achieved using a kneader with a kneading time of at least 15 minutes.

3. The desulfurizer of claim 2, wherein the kneading time is 15-30 minutes.

4. The desulfurizer of claim 1, wherein the reacting temperature does not exceed 50°C.

5. The desulfurizer of claim 1, wherein said roasting temperature is 80°C -100°C.

6. A method for preparing said desulfurizer of claim 1, wherein, comprising the following steps:
(1) mixing a solid soluble ferrous salt with a solid hydroxide to yield a first mixture, wherein the molar ratio of iron element in ferrous salt and hydroxyl in the solid hydroxide is 1:2 to 1:3, and wherein the solid hydroxide is a hydroxide of Group IA or Group IIA elements;
(2) kneading said first mixture and allowing it to react at a temperature not exceeding 70°C to yield a second mixture;
(3) oxidizing said second mixture in the air, and then washing it with water and filtering to yield a third mixture;
(4) drying said third mixture in the air or roasting said third mixture at a temperature not exceeding 100°C to yield the composition comprising amorphous iron oxide hydroxide;
(5) mixing said composition comprising amorphous iron oxide hydroxide with organic binder and additive into a fourth mixture wherein the weight percent of said composition comprising amorphous iron oxide hydroxide is 88 %-92%, the weight percent of said organic binder is 7%-11% and the weight percent of said additive is 1%-5%;
(6) shaping said fourth mixture into a stripe, ball or a pill;
(7) drying the shaped mixture naturally, or roasting the shaped mixture at temperatures between 60°C and 90°C to yield the desulfurizer.

## Patentansprüche

1. Regenerierbares Entschwefelungsmittel, umfassend
eine Zusammensetzung, umfassend amorphes Eisenoxidhydroxid,
ein organisches Bindemittel, zusammengesetzt aus NatriumCarboxymethylcellulose, Sesbaniapulver, Zellulosepulver oder einer Mischung daraus, und
ein Additiv, zusammengesetzt aus Sägemehlpulver, Reishülsenpulver, Weizenkleiepulver oder einer Mischung daraus;
wobei der Gewichtsprozentsatz der amorphes Eisenoxidhydroxid umfassenden Zusammensetzung 88%-92% beträgt, der Gewichtsprozentsatz des organischen Bindemittels 7%-11% beträgt und der Gewichtsprozentsatz des Additivs 1%-5% beträgt, und
wobei die Zusammensetzung aus amorphem Eisenoxidhydroxid gemäß den folgenden Schritten hergestellt wird:
(1) Mischen eines im festen Zustand löslichen Eisen(II)-Salzes mit einem festen Hydroxid, um eine erste Mischung zu erhalten, wobei das Molverhältnis des Eisenelements im Eisen(II)-Salz und Hydroxyl im festen Hydroxid 1:2 bis 1:3 beträgt und wobei das feste Hydroxid ein Hydroxid ist, das aus Elementen der Gruppe IA oder der Gruppe IIA besteht;
(2) Kneten der ersten Mischung und diese bei einer Temperatur reagieren lassen, die 70 °C nicht übersteigt, um eine zweite Mischung zu erhalten;
(3) Oxidieren der zweiten Mischung an der Luft und anschließendes Waschen mit Wasser und Filtern, um eine dritte Mischung zu erhalten;
(4) Trocknen der dritten Mischung an der Luft oder Rösten der dritten Mischung bei einer Temperatur, die 100 °C nicht übersteigt, um eine Zusammensetzung zu erhalten, die amorphes Eisenoxidhydroxid umfasst.

2. Entschwefelungsmittel gemäß Anspruch 1, wobei das Kneten in Schritt (2) unter Verwendung einer Knetmaschine mit einer Knetzeit von mindestens 15 Minuten erfolgt.

3. Entschwefelungsmittel gemäß Anspruch 2, wobei die Knetzeit 15-30 Minuten beträgt.

4. Entschwefelungsmittel gemäß Anspruch 1, wobei die Reaktionstemperatur 50 °C nicht übersteigt.

5. Entschwefelungsmittel gemäß Anspruch 1, wobei die Rösttemperatur 80 °C bis 100 °C beträgt.

6. Verfahren zur Herstellung des Entschwefelungsmittels gemäß Anspruch 1, wobei das Verfahren die folgenden Schritte umfasst:
(1) Mischen eines im festen Zustand löslichen Eisen(II)-Salzes mit einem festen Hydroxid, um eine erste Mischung zu erhalten, wobei das Molverhältnis des Eisenelements im Eisen(II)-Salz und Hydroxyl im festen Hydroxid 1:2 bis 1:3 beträgt und wobei das feste Hydroxid ein Hydroxid ist, das aus Elementen der Gruppe IA oder der Gruppe IIA besteht;
(2) Kneten der ersten Mischung und diese bei einer Temperatur reagieren lassen, die 70 °C nicht übersteigt, um eine zweite Mischung zu erhalten;
(3) Oxidieren der zweiten Mischung an der Luft und anschließendes Waschen mit Wasser und Filtern, um eine dritte Mischung zu erhalten;
(4) Trocknen der dritten Mischung an der Luft oder Rösten der dritten Mischung bei einer Temperatur, die 100 °C nicht übersteigt, um eine Zusammensetzung zu erhalten, die amorphes Eisenoxidhydroxid umfasst;
(5) Mischen der amorphes Eisenoxidhydroxid umfassenden Zusammensetzung mit organischem Bindemittel und einem Additiv zu einer vierten Mischung, wobei der Gewichtsprozentsatz der amorphes Eisenoxidhydroxid umfassenden Zusammensetzung 88%-92% beträgt, der Gewichtsprozentsatz des organischen Bindemittels 7%-11% beträgt und der Gewichtsprozentsatz des Additivs 1%-5% beträgt;
(6) Formen der vierten Mischung zu einem Streifen, einem Ball oder einer Pille;
(7) Trocknen der geformten Mischung auf natürliche Weise oder Rösten der geformten Mischung bei Temperaturen zwischen 60 °C und 90° C, um das Entschwefelungsmittel zu erhalten.

## Revendications

1. Désulfurisant pouvant être régénéré comprenant
une composition comprenant de l'hydroxyde de fer amorphe,
un liant organique, choisi dans le groupe constitué par la carboxyméthylcellulose sodique, la poudre de sesbania, la poudre de cellulose et un mélange de celles-ci, et un additif choisi dans un groupe constitué de poudre de sciure de bois, de poudre de balle de riz, de poudre de son de blé et d'un mélange de celles-ci ;
Où le pourcentage en masse de ladite composition comprenant de l'hydroxyde d'oxyde de fer amorphe est de 88 % à 92 %, le pourcentage en poids dudit liant organique est de 7 % à 11 % et le pourcentage en poids dudit additif est de 1 % à 5 %, et
Dans lequel ladite composition comprenant de l'hydroxyde d'oxyde de fer amorphe est préparée selon les étapes suivantes :
(1) mélanger un sel ferreux soluble solide avec un hydroxyde solide pour donner un premier mélange, dans lequel le rapport molaire de l'élément de fer dans le sel ferreux et de l'hydroxyle dans l'hydroxyde solide est de 1 : 2 à 1 : 3 ; et dans lequel l'hydroxyde solide est un hydroxyde d'éléments du groupe IA ou du groupe IIA ;
(2) malaxer ledit premier mélange et lui permettre de réagir à une température ne dépassant pas 70°C pour donner un second mélange ;
(3) oxyder ledit deuxième mélange à l'air, puis le laver avec de l'eau et filtrer pour obtenir un troisième mélange ;
(4) sécher ledit troisième mélange à l'air ou griller ledit troisième à une température ne dépassant pas 100°C pour donner la composition comprenant de l'hydroxyde d'oxyde de fer amorphe.

2. Désulfurisant selon la revendication 1, dans lequel, dans l'étape (2), le pétrissage atteint en utilisant un malaxeur avec un temps de malaxage d'au moins 15 minutes.

3. Désulfurisant selon la revendication 2, dans lequel le temps de malaxage est de 15 - 30 minutes.

4. Désulfurisant selon la revendication 1, dans lequel la température de réaction ne dépasse pas 50°C.

5. Désulfurisant selon la revendication 1, dans lequel ladite température de torréfaction est de 80°C à 100°C.

6. Procédé de préparation dudit désulfurisant selon la revendication 1, dans lequel, comprenant les étapes suivantes :
(1) mélanger du sel ferreux soluble solide avec un hydroxyde solide pour donner un premier mélange, où, le rapport molaire de l'élément fer dans le sel ferreux et l'hydroxyle dans l'hydroxyde solide est de 1 : 2 à 1 : 3, et dans lequel l'hydroxyde solide est un hydroxyde des éléments du groupe IA ou du groupe IIA ;
(2) malaxer ledit premier mélange et lui permettre de réagir à une température ne dépassant pas 70°C pour donner un second mélange ;
(3) oxyder ledit deuxième mélange à l'air, puis le laver avec de l'eau et filtrer pour obtenir un troisième mélange ;
(4) sécher ledit troisième mélange à l'air ou griller ledit troisième à une température ne dépassant pas 100°C pour donner la composition comprenant de l'hydroxyde d'oxyde de fer amorphe.
(5) Mélanger ladite composition comprenant de l'hydroxyde de fer amorphe avec un liant organique et un additif dans un quatrième mélange dans lequel le pourcentage en poids de ladite composition comprenant de l'hydroxyde de fer amorphe est de 88 % - 92 %, le pourcentage en poids dudit liant organique est de 11 % et le pourcentage en poids dudit additif est de 1 % - 5 % ;
(6) façonner ledit quatrième mélange en une bande, une balle ou une pilule ;
(7) sécher le mélange façonné naturellement, ou griller le mélange formé à des températures comprises entre 60°C et 90°C pour donner le désulfurisant.
